## Europäisches Patentamt
## European Patent Office
## Office européen des brevets

(19)

(11) Numéro de publication: **0 067 099**
**B1**

(12)

# FASCICULE DE BREVET EUROPEEN

(45) Date de publication du fascicule du brevet:
**08.08.84**

(51) Int. Cl.³: **F 16 D  13/75**

(21) Numéro de dépôt: **82400935.1**

(22) Date de dépôt: **19.05.82**

---

(54) **Commande mécanique.**

---

(30) Priorité: **29.05.81  FR 8110719**

(43) Date de publication de la demande.
**15.12.82 Bulletin 82/50**

(45) Mention de la délivrance du brevet:
**08.08.84 Bulletin 84/32**

(84) Etats contractants désignés:
**DE GB IT**

(56) Documents cités:
**DE - A - 2 160 278**
**DE - A - 2 847 257**
**FR - A - 2 441 507**
**GB - A - 1 181 920**
**GB - A - 1 235 083**
**GB - A - 1 411 467**
**GB - A - 2 022 210**

(73) Titulaire: **SOCIETE ANONYME D.B.A., Centre Paris Pleyel, F-93521 St-Denis Cédex 01 (FR)**

(72) Inventeur: **Courbot, Pierre, 5 bis rue d'Hérivaux, F-95400 Villiers le Bel (FR)**

(74) Mandataire: **Le Moenner, Gabriel et al, SERVICE BREVETS BENDIX 44, Rue François 1er, F-75008 Paris (FR)**

---

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

La présente invention a pour objet une commande mécanique plus particulièrement destinée à la commande par câble d'un récepteur comportant des organes d'engagement ou de friction susceptibles de s'user au fur et à mesure de l'utilisation de ce récepteur, et comportant également des moyens de rappel élastique exerçant un effort que la commande mécanique doit vaincre pour actionner ledit récepteur. Ce type de récepteur est le plus souvent constitué par un embrayage à friction à diaphragme ou par des freins de types couramment utilisés sur les véhicules automobiles.

L'invention vise plus particulièrement une commande du type comportant une pédale montée pivotante sur un axe fixé au véhicule pour actionner, au moyen d'un élément de transmission monté tournant sur ledit axe fixe, un câble de commande dont une extrémité est couplée audit élément de transmission, de liaison permettant de lier en rotation ledit élément de transmission et ladite pédale lorsque cette dernière pivote depuis sa position de repos d'un angle supérieur à un angle minimum prédéterminé $\alpha$m, et un ressort de réglage prévu pour solliciter l'élément de transmission en rotation autour dudit axe fixe dans le sens correspondant à la tension dudit câble afin d'effectuer automatiquement le rattrapage des jeux pouvant apparaître dans la commande mécanique, et notamment ceux résultant de l'usure de garnitures de friction du récepteur ou d'un allongement du câble de commande. Une commande mécanique de ce type est décrite dans le brevet britannique GB 1 181 920 publié le 18 Février 1970.

Des commandes mécanique d'un type similaire sont décrites dans les demandes de brevet d'invention français No. 79-14311 (publiée le 4 janvier 1980 sous le No. 2 428 281) et No. 78-32450 (publiée le 13 juin 1980 sous le No. 2 441 507).L'ensemple des mécanismes mentionnés ci-dessus, bien que permettant d'effectuer correctement le rattrapage automatique des jeux pouvant apparaître dans la commande, ne présente pas des qualités de fiabilité et de sécurité suffisantes. En effet, dans chacun des ces mécanismes, les moyens de liaison permettant de lier en rotation la pédale et l'élément de transmission pivotant sont constitués par un cliquet ou un pignon montés pivotant autour d'un axe fixé à la pédale et coopérant avec un secteur denté formé sur l'élément de transmission. Dans le cas de l'utilisation du cliquet, ce dernier est en permanence maintenu en contact avec le secteur denté au moyen d'un ressort. On constate ainsi qu'en cas d'usure ou de rupture des dents formées sur le secteur denté ou du ressort du cliquet ou de l'axe de pivotement du cliquet ou du pignon, le conducteur se trouve dans l'impossibilité d'actionner l'embrayage au moyen de la pédale montée dans l'habitacle du véhicule.

Dans ce type de commande, le rappel de la pédale vers sa position de repos est effectué par un ressort de rappel de pédale. Ces ressorts de pédale sont généralement constitués par des ressorts de traction qui sont sollicités lors de chaque actionnement de la pédale sur une course correspondant à l'actionnement complet de la pédale, et sont de ce fait soumis à des contraintes de fatigue très importantes pouvant entraîner très rapidement la rupture du ressort de rappel de la pédale.

Dans l'ensemble des mécanismes de commande mentionnés plus haut, une extrémité du câble est fixée audit élément de transmission monté tournant sur l'axe fixe. On comprend donc que le rattrapage automatiques des jeux ne peut s'effectuer que si ledit élément de transmission est libre de pivoter autour de l'axe fixe sous l'action du ressort de réglage lorsque les divers composants de la commande mécanique sont dans leur position de repos; en cas de grippage de l'élément de transmission sur l'axe fixe, le rattrapage automatique des jeux ne peut pas s'effectuer.

L'invention a pour but de remédier à l'ensemble des inconvénients majeurs qui viennent d'être mentionnés.

Dans ce but, l'invention propose une commande mécanique pour récepteur du type comportant des organes d'engagement et des moyens élastiques de rappel exerçant un effort que la commande mécanique doit vaincre pour actionrer ledit récepteur, ladite commande mécanique comportant une pédale montee pivotante sur un axe fixe, un câble dont une première extrémité est reliée audit récepteur et dont la seconde extrémité est reliée à la pédale au moyen d'un dispositif d'entraînement, caractérisée en ce que ledit dispositif d'entraînement comprend un élément transmetteur d'effort monté pivotant sur ledit axe fixe et sur une surface cylindrique externe duquel est enroulé ledit câble, un système de verrouillage permettant de lier en rotation ledit élément transmetteur d'effort, ledit câble et ladite pédale lorsque cette dernière pivote depuis sa position de repos d'un angle supérieur à un angle minimum prédéterminé $\alpha$m, et un ressort disposé entre ladite seconde extrémité du câble et ladite pédale pour solliciter ledit câble en tension.

Selon une autre caractéristique de l'invention, ledit élémert transmetteur d'effort est muni d'une première surface de butée coopérant avec une butée fixe lorsque ledit élémert transmetteur d'effort occupe sa position de repos, et d'une seconde surface de butée coopérant avec une surface de butée formée sur ladite pédale pour définir ladite position de repos de la pédale.

Selon l'invention, le système de verrouillage agit par coincement dudit câble entre une première surface de coincement formée sur ledit élément transmetteur d'effort et une seconde surface de coincement formée sur ladite pédale, cette dernière surface de coincement coopérant avec ladite première surface de coincement au travers dudit câble pour entraîner en rotation l'élément transmetteur d'effort sur lequel le câble est enroulé pour provoquer l'entraînement de ce dernier lorsque la pédale pivote d'un angle supérieur audit angle prédéterminé.

Le ressort unique de la commande mécanique est un ressort de réglage du type hélicoïdal cylindrique de compression enfilé sur ledit câble et prenant appui, d'une part sur ladite seconde extrémité du câble, et d'autre part sur une patte d'appui formée sur ladite pédale de façon à ce que ledit câble soit sollicité en tension par ledit ressort. Le ressort est positionné par rapport à ladite pédale de façon à provoquer une rotation de cette dernière autour de l'axe fixe en direction de sa position de repos jusqu'à ce que ladite seconde surface de butée vienne en contact avec la surface de butée formée sur la pédale pour définir ladite position de repos de la pédale.

L'invention sera maintenant décrite en détail en se référant aux dessins annexés dans lesquels:

— la figure 1 est une vue en coupe transversale d'une commande mécanique réalisée selon les enseignements de la présente invention;

— la figure 2 est une vue en coupe selon la ligne 2-2 de la figure 1;

— la figure 3 est une vue en coupe selon la ligne 3-3 de la figure 1 d'un détail de la réalisation de la commande mécanique;

— la figure 4 est une vue en coupe selon la ligne 4-4 de la figure 1 d'un détail de réalisation de la commande mécanique;

— la figure 5 est une vue schématique de la commande mécanique représentée à la figure 1 appliquée à la commande d'un embrayage à friction de véhicule automobile, représentée dans sa position embrayée;

— la figure 6 est une vue similaire à celle de la figure 5 dans laquelle l'embrayage est représenté dans la position débrayée sous l'action de la commande mécanique; et

— la figure 7 est une vue en coupe transversale d'un deuxième mode de réalisation du manchon rigide de la figure 1.

La commande mécanique selon l'invention comprend une pédale 10 montée pivotante sur un axe 12 fixé au châssis (non représenté) d'un véhicule automobile. La pédale 10 est constituée par deux flasques latéraux 14 et 16 fixés sur une douille cylindrique 18 en trois parties, formant entretoise et montée serrée sur un arbre creux 20. L'arbre creux 20 est monté tournant sur l'axe fixe 12. Dans le mode de réalisation représenté, les deux flasques latéraux sont corstitués par une pièce unique en tôle pliée.

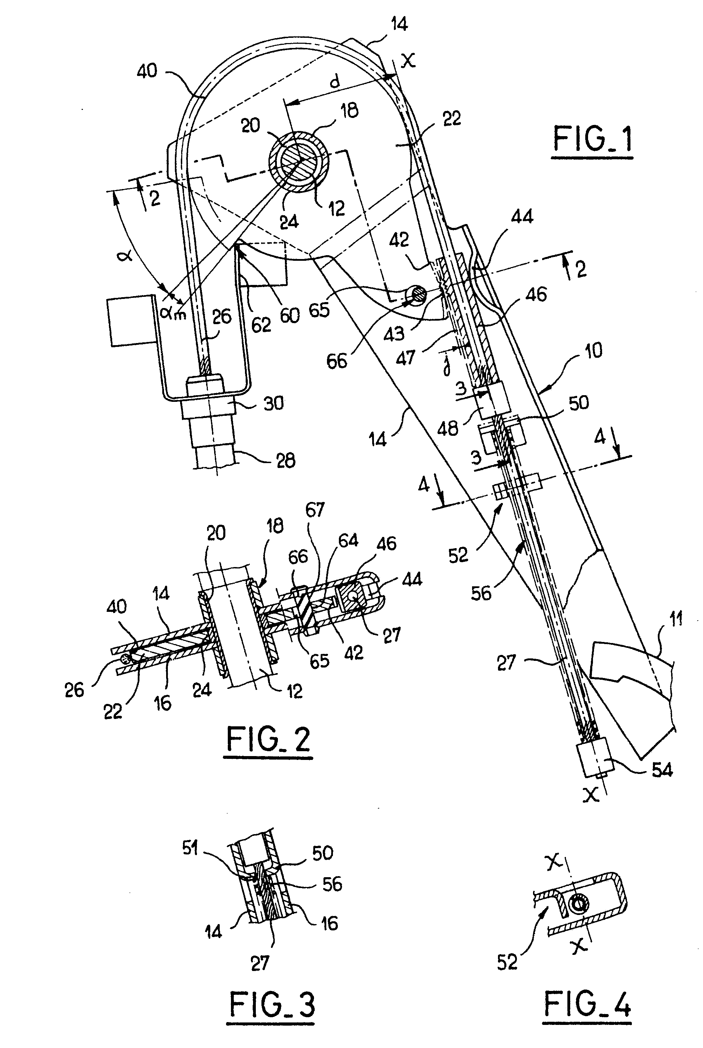

La commande mécanique comprend un élément transmetteur d'effort 22 en forme de disque, monté pivotant sur la douille 12 qui pénètre dans l'alésage 24 de l'élément 22. Comme on peut le constater à la figure 2, l'élément transmetteur d'effort 22 est guidé par des flasques latéraux 14 et 16.

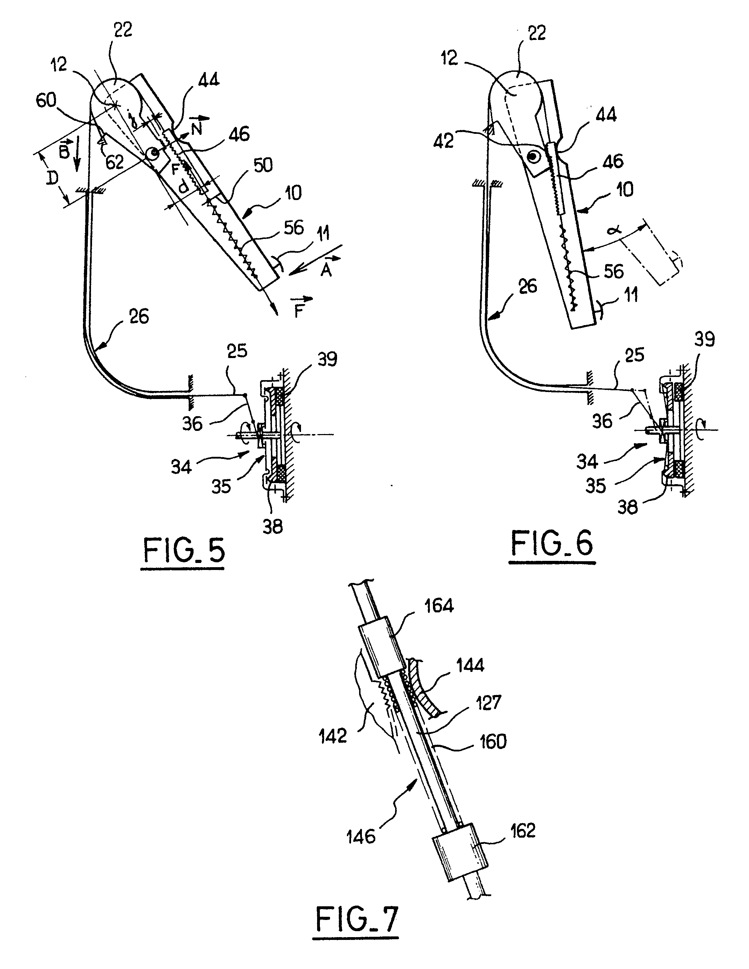

La commande mécanique comprend un câble 26 monté coulissant à l'intérieur d'une gaine 28 qui prend appui, au moyen d'une butée 30, sur une partie fixe du châssis du véhicule. Comme on peut le constater à la figure 5, la première extrémité 25 du câble 26 et reliée à l'organe récepteur constitué dans l'exemple représenté par un embrayage à friction 34. L'embrayage 34 comprend une fourchette d'embrayage 36 à laquelle est fixée l'extrémité 25 du câble 26. La fourchette 36 est montée pivotante par rapport au châssis et est reliée à un plateau d'embrayage 38 qui est normalement maintenu en contact avec un disque 39 muni de garnitures de friction par des moyens élastiques de rappel du ressort d'embrayage 35 prenant appui sur le châssis du véhicule.

Le câble 26 coopère avec la surface cylindrique périphérique externe 40 de l'élément transmetteur d'effort 22 autour de laquelle ils s'enroule lors de l'actionnement de la commande.

L'élément transmetteur d'effort 22 est un des composants du dispositif d'entraînement qui permet de relier la seconde extrémité 27 du câble 26 à la pédale 10. Le dispositif d'entraînement comprend en outre un système de verrouillage permettant de lier en rotation l'élément transmetteur d'effort 22, l'extrémité 27 du câble et la pédale 10 de façon à provoquer le déplacement axial du câble 26 dans la gaine 28 lors de l'actionnement de la commande mécanique. Le système de verrouillage selon l'invention est un système qui agit par coincement de l'extrémité 27 du câble 26 entre une première surface de butée 42 formée sur l'élément transmetteur d'effort et une seconde surface de coincement 44 formée sur la pédale 10. Dans le mode de réalisation représenté, la seconde surface de coincement 44 est constituée par un bossage obtenu par déformation de la tôle constituant la pédale 10. L'extrémité 27 du câble 26 est renforcée au moyen d'un manchon rigide 46 enfilée sur l'extrémité de câble 27 et immobilisée par rapport a cette dernière au moyen d'une virole 48 sertie sur l'extrémité 27 du câble. Le manchon rigide 46 est disposé entre les deux surfaces de coincement 42 et 44. L'extrémité 27 du câble 26 muni die son manchor rigide 46 est positionnée sur la pédale 10 au moyen d'une patte d'appui 50 solidaire de la pédale 10 et au moyen d'un guide en tôle 52. L'extrémité 27 du câble 26 est en outre munie d'un ressort hélicoïdal cylindrique de compression 56 enfilé sur l'extrémité 27 du câble et qui prend appui, d'une part sur une virole 54 sertie à la partie extrème de l'extrémité 27 du câble 26, et d'autre part sur la patte d'appui 50 solidaire de la pédale 10. La patte d'appui 50 et le guide 52 sont disposés de telle sorte que le câble 27 qui est tendu par l'effort élastique exercé par le ressort 56 exerce un effort de traction sur l'élément transmetteur d'effort 22 dort la drection XX est distante de l'axe fixe 18 d'une cote »d«. Le guide 54 et la patte 50 sont en outre disposés de telle sorte que le manchon rigide 46 soit en permanence maintenu en contact avec ladite seconde surface de coincement 44 formée sur la pédale 10. Comme on peut le constater à la figure 1, le manchon rigide 46 et la première surface de coincement 42 sont munis de dents 47 et 43, respectivement, susceptibles de coopérer entre elles lors de l'actionnement de la commande.

La position de repos de la pédale 10 par rapport au châssis du véhicule est définie de la manière suivante: l'élément transmetteur d'effort 22 est muni d'une première surface de butée 60 qui coopère avec une butée fixe 62 du châssis du véhicule lorsque l'élément transmetteur d'effort 22 occupe sa position de repos dans laquelle il est représenté à la figure 1. L'élément transmetteur d'effort 22 est muni d'une deuxième surface de butée 64 qui, dans le mode de réalisation représenté, est constituée par la paroi latérale interne d'un alésage 65 formé dans l'élément transmetteur d'effort 22. La seconde surface de butée 64 coopère avec une troisième surface de butée formée sur la pédale 10 et qui, dans le mode de réalisation représenté, est constitué par la paroi latérale externe 67 d'un axe cylindrique monté parallèlement à la douille 18 entre les flasques latraux 14 et 16. Lorsque les differents éléments de la commande occupent leur position de repos représentée sur la figure 1, la première surface de butée 60 formée sur l'élément transmetteur d'effort 22 est en contact avec la butée fixe 62 sur le châssis du véhicule et la trousième surface de butée 67 formée par la paroi latérale externe de l'axe 66 est en contact avec la deuxième surface de butée 64 formée par la paroi latérale interne de l'alésage 65 formé dans l'élément transmetteur d'effort 22. Dans cette position et comme on peut le constater à la figure 1, il existe un jeu prédériminé »j« entre la première surface de coincement 42 et la paroi latérale externe du manchon rigide 46 qui est lui-même en contact avec la première surface de coincement 44. Les composants de la commande sont maintenus dans cette position de repos par l'action du ressort 56 sur la pédale 10. L'effort de rappel élastique de la pédale ou effort de maintien de pédale $\vec{N}$ est égal à:

$$\vec{N} = \frac{\vec{F} \times d \times K}{D}$$

$\vec{F}$   est l'effort élastique exercé par le ressort 56 sur le câble 27;

d   est la distance séparant la ligne d'action XX de l'effort $\vec{F}$ de l'axe fixe;

D   est la distance séparant l'axe fixe 12 du point de contact entre la première surface de coincement 42 et la paroi périphérique externe du manchon rigide 46;

K   est une constante.

On comprend qu'ainsi le ressort 56 exerce sur la pédale 10 un couple tendant à faire tourner cette dernière dans le sens inverse des aiguilles d'une montre lorsque l'on regarde la figure 1, jusqu'à ce que la troisième surface de butée 67 vienne en contact avec la seconde surface de butée 64.

On décrira maintenant le fonctionnement de la commande mécanique en se référant plus particulièrement aux figures 5 et 6. Lorsque le conducteur désire débrayer, il applique un effort sur l'extrémité 11 de la pédal 10 dans la direction indiquée par la flèche A de la figure 5. Sous l'action de cet effort A, la pédale 10 pivote autour de l'axe fixe 12 d'un angle minimum prédériminé $\alpha m$ jusqu'à ce que la première surface de coincement 42 vienne en contact avec la surface périphérique externe du manchon 47 c'est-à-dire jusqu'à ce que le jeu prédéterminé »j« soit rattrapé. Lorsque la pédale a pivoté de cet angle $\alpha m$, le câble 27 est coincé entre les surfaces de coincement 44 et 42 et ne peut donc plus se déplacer dans la direction parallèle à la directior XX par rapport à la pédale 10. Si le conducteur prolonge son effort dans la direction $\vec{A}$, il entraîne en rotation l'élément transmetteur d'effort 22 au travers du manchon rigide 46 et provoque ainsi l'enroulement du câble 26 sur la surface périphérique externe 40 de l'élément transmetteur d'effort agit sur le câble 26 comme un treuil et provoque le déplacement axial de celui-ci dans la gaine 28. Lorsque le conducteur a fait pivoter la pédale 10 autour de l'axe fixe 12 d'un angle $\alpha$, la pédale occupe la position représentée à la figure 6 dans laquelle l'embrayage est en position débrayée. Lorsque l'opérateur relâche progressivement son effort sur l'extrémité 11 de la pédale 10, les moyens élastiques de rappel 35 de l'embrayage 34 exercent sur le câble 26 un effort qui tend à déplacer ce dernier dans la direction indiquée par la flèche $\vec{B}$ de la figure 2. L'effort de rappel élastique de l'embrayage 34 appliquée au câble 26 provoque l'entraînement en rotation par frottement entre la périphérie externe du câble 26 et la surface périphérique externe 40 de l'élément transmetteur d'effort 22 de ce dernier autour de l'axe fixe 12; ce pivotement de l'élément transmetteur d'effort dans le sens inverse des auiguilles d'une mortre continue jusqu'à ce que la première surface de butée 60 vienne en butée sur la butée fixe 62 du châssis du véhicule. Lorsque cette position est atteinte, la pédale continue de pivoter autour de l'axe fixe 12 sous l'action de l'effort de rappel de pédale $\vec{N}$ dont la valeur a été explicitée plus haut, jusqu'à ce que la seconde surface de butée 64 vienne en butée avec la troisième surface de butée 67 formée sur la pédale 10. Lorsque cette position est atteinte, les composants de la commande occupent à nouveau la position représenté aux figures 1 et 6, position dans laquelle l'extrémité du câble 27 muni de son manchon rigide 45 est libre de coulisser axialement dans la direction XX par rapport à la pédale 10. Un tel coulissement peut se produire pour rattraper l'usure des garnitures de friction du disque d'embrayage. Dans ce cas, l'effort de rappel des moyens élastiques de rappel d'embrayage 35 provoque le déplacement du câble 26 qui glisse sur la surface périphérique externe 40 de l'élément transmetteur d'effort. Ce glissement du câble s'effectue à l'encontre de l'effort élastique $\vec{F}$ exercé par le ressort de pédale 56. Le glissement du câble 26 s'effectue jusqu'à ce que les garnitures de friction de l'embrayage soient à nouveau en contact avec le plateau. On comprend qu'ainsi tous les jeux pouvant apparaître, dûs soit à la détente du câble 26 soit à l'usure des garnitures de friction, sont automatiquement rattrapés par la commande mécanique représenté à la figure 1.

La commande mécanique représentée à la figure 1 permet également de compenser les tolérances du véhicule lors de l'installation du câble sur ce dernier, le manchon rigide 46 étant libre de se déplacer axialement par rapport à la pédale 10. Pour effectuer l'installation du câble sur le véhicule, le mécanicien doit comprimer le ressort 56 en appui sur la virole d'appui 54 pour pouvoir introduire l'extrémité 27 du câble dans l'ouverture 51 de la patte d'appui 50 de la pédale 10 et glisser le câble dans le guide 52. L'opérateur relâche ensuite le câble 56 qui vient prendre appui sur la patte d'appui 50 et exerce un moment élastique de rappel sur la pédale 10 jusqu'à ce que cette dernière vienne occuper sa position de repos.

Comme il ressort de ce qui précéde, le ressort 56 a une double fonction de ressort de réglage et de ressort de rappel élastique de pédale. Par rapport aux ressorts de rappel de pédale classiques le ressort 56 n'est pratiquement soumis à aucun effort de traction ou de compression lors de l'actionnement de la commande mecanique et doit être corsidéré comme un ressort statique par rapport à la pédale 10. Le ressort 56 ne subissant ainsi aucun effort important est d'une grande fiabilité et d'une longue durée de vie.

On a représenté à la figure 7 un deuxième mode de réalisation du manchon rigide 46 de la figure 1. Dans ce mode de réalisation, le manchon 146 est constitué par un ressort de compression 160 à spires jointives, monté comprimé entre deux viroles 162 et 164 serties sur l'extrémité 127 du câble 26. Les spires jointi es du ressort 160 remplacent les dents 47 formées à la surface périphérique externe du manchon rigide 46.

## Revendications

1. Commande mécanique pour récepteur (34) du type comportant des organes d'engagement (39) et des moyens élastiques de rappel (35) exerçant un effort que la commande mécanique doit vaincre pour actionner ledit récepteur, ladite commande mécanique comportant une pédale (10) montée pivotante sur un axe fixe (12), un câble (26) dont une première extrémité (25) est reliée audit récepteur (34) et dont la seconde extrémité(27) est reliée à la pédale (10) au moyen d'un dispositif d'entraînement, caractérisée en ce que ledit dispositif d'entraînement comprend un élément transmetteur d'effort (22) monté pivotant sur ledit axe fixe (12) et sur une surface cylindrique externe (40) duquel est enroulé ledit câble (26), un système de verouillage permettant de lier en rotation ledit élément transmetteur d'effort (22), ledit câble (26) et ladite pédale (10) lorsque cette dernière pivote depuis sa position de repos d'un angle supérieur à un angle minimum prédéterminé ᴧm, et un ressort (56) disposé entre ladite seconde extrémité du câble (27) et ladite pédale (10) pour solliciter ledit câble (26) en tension.

2. Commande mécanique selon la revendication 1, caractérisée en ce que ledit élément transmetteur d'effort (22) est muni d'une première surface de butée (60) coopérant avec une butée fixe (62) lorsque ledit élément transmetteur d'effort (22) occupe sa position de repos, et d'une seconde surface de butée (64) coopérant avec une surface de butée (67) formée sur ladite pédale (10) pour définir ladite position de repos de la pédale.

3. Commande mécanique selon la revendication 1 ou 2, caractérisé en ce que ledit système de verrouillage agit par coincement dudit câble (26) entre une première surface de coincement (42) formée sur ledit élément transmetteur d'effort (22) et une seconde surface de coincement (44) formée sur ladite pédale (10), cette dernière surface de coincement (44) coopérant avec ladite première surface de coincement (42) au travers dudit câble (26) pour entraîner en rotation l'élément transmetteur d'effort (22) sur lequel le câble (26) est enroulé pour provoquer l'entraînement de ce dernier lorsque la pédale pivote d'un angle supérieur audit angle prédéterminé.

4. Commande mécanique selon la revendication 3, caractérisée en ce que la surface externe (47) dudit câble (26) est constamment maintenue en contact avec ladite seconde surface de coincement (44) formée sur la pédale, ladite surface externe du câble étant éloignée d'une distance prédéterminée »j« de ladite première surface de coincement lorsque ledit élément transmetteur d'effort (22) et ladite pédale (10) occupent leur position de repos.

5. Commande mécanique selon la revendication 4, caractérisée en ce que ledit câble (26) est muni, au voisinage de ladite seconde extrémité (27), d'un manchon (46) enfilé et fixé sur le câble, ladite surface externe du câble étant constituée par la paroi externe dudit manchon rigide.

6. Commande mécanique selon la revendication 5, caractérisé en ce que ladite paroi externe du manchon est muni d'une série de protubérances formées en vis-à-vis de ladite première surface de coincement (42).

7. Commande mécanique selon la revendication 5 ou 6, caractérisée en ce que ladite première surface de coincement (42) est munie de dents (43).

8. Commande selon l'une quelconque des revendications précédentes, caractérisée en ce que ledit ressort (56) est un ressort hélicoïdal cylindrique de compression enfilé sur ledit câble (26) et prenant appui, d'une part sur ladite seconde extrémité du câble, et d'autre part sur une patte d'appui (50) formée sur ladite pédale (10) de façon à ce que ledit câble (26) soit sollicité en tension par ledit ressort (56).

9. Commande mécanique selon la revendication 8, caractérisée en ce que ledit ressort (56) est positionné sur ladite pédale (10) de façon à provoquer une rotation de cette dernière autour de l'axe fixe (12) en direction de sa position de repos jusqu'à ce que ladite seconde surface de butée (64) vienne en contact avec la surface de butée (67) formée sur la pédale (10) pour définir ladite position de repos de la pédale.

10. Commande selon la revendication 6, caractérisé en ce que ledit manchon est constitué par un ressort cylindrique hélicoïdal à spires jointives (160), lesdites protubérances étant constituées par lesdites spires.

## Patentansprüche

1. Mechanische Betätigungsvorrichtung für einen Empfänger (34), der in Eingriff zu rückende Organe (39) und elastische Rückholmittel (35) aufweist, die eine Kraft ausüben, die die mechanische Betätigungsvorrichtung zur Betätigung des Empfängers überwinden muß, wobei die mechanische Betätigungsvorrichtung ein um eine feste Achse (12) schwenkbar gelagertes Pedal (10) und ein Kabel (26) aufweist, dessen erstes Ende (25) mit dem Empfänger (34) verbunden ist und dessen zweites Ende (27) mit dem Pedal (10) über eine Mitnehmervorrichtung verbunden ist, dadurch gekennzeichnet, daß die Mitnehmervorrichtung aufweist: ein kraftübertragendes Element (22), das um die besagte feste Achse (12) schwenkbar gelagert und mit einer zylindrischen Außenfläche (40) versehen ist, um die das Kabel (26) gewickelt ist, eine Verriegelungseinrichtung, die eine Drehverbindung zwischen dem Kraftübertragenden Element (22), dem Kabel (26) und dem Pedal (10) herstellt, wenn das letztere aus seiner Ruhestellung um einen Winkel schwenkt, der größer ist als ein vorgegebener Mindestwinkel ($\alpha_m$), und eine Feder (56), die zwischen dem zweiten Ende des Kabels (27) und dem Pedal (10) angeordnet ist, um das Kabel (26) unter Zugspannung zu halten.

2. Mechanische Betätigungsvorrichtung nach Anspruch 1, dadurch gekennzeichnet, daß das kraftübertragende Element (22) mit zwei Anschlagflächen (60, 64) versehen ist, von denen die erste Anschlagfläche (60) mit einem festen Anschlag (62) zusammenwirkt, wenn das kraftübertragende Element (22) seine Ruhestellung einnimmt, und die zweite Anschlagfläche (64) mit einer am Pedal (10) gebildeten Anschlagfläche (67) zusammenwirkt, um die Ruhestellung des Pedals festzulegen.

3. Mechanische Betätigungsvorrichtung nach Anspruch 1 oder 2, dadurch gekennzeichnet, daß die Verriegelungseinrichtung in der Weise wirkt, daß sie das Kabel (26) zwischen einer an dem kraftübertragenden Element (22) gebildeten ersten Klemmfläche (42) und einer am Pedal (10) gebildeten zweiten Klemmfläche einklemmt, wobei die letztere Klemmfläche (44) mit der ersten Klemmfläche (44) über das Kabel (26) zusammenwirkt, um eine Drehbewegung des kraftübertragenden Elementes (22) hervorzurufen, um das das Kabel (26) gewickelt ist, um das letztere mitzunehmen, wenn das Pedal um einen größeren Winkel als den vorgegebenen Winkel schwenkt.

4. Mechanische Betätigungsvorrichtung nach Anspruch 3, dadurch gekennzeichnet, daß die Außenfläche (47) des Kabels (26) beständig in Berührung gehalten wird mit der am Pedal gebildeten zweiten Klemmfläche (44), wobei die Außenfläche des Kabels einen vorgegebenen Abstand (»j«) von der ersten Klemmfläche hat, wenn das erste kraftübertragende Element (22) und das Pedal (10) ihre Ruhestellung einnehmen.

5. Mechanische Betätigungsvorrichtung nach Anspruch 4, dadurch gekennzeichnet, daß das Kabel (26) in Nähe des zweiten Endes (27) mit einer Hülse (46) versehen ist, die über das Kabel gezogen und daran befestigt ist, wobei die Außenfläche des Kabels von der Außenwand der starren Hülse gebildet wird.

6. Mechanische Betätigungsvorrichtung nach Anspruch 5, dadurch gekennzeichnet, daß die Außenwand der Hülse mit einer Reihe von Vorsprüngen versehen ist, die gegenüber der ersten Klemmfläche (42) gebildet sind.

7. Mechanische Betätigungsvorrichtung nach Anspruch 5 oder 6, dadurch gekennzeichnet, daß die erste Klemmfläche (42) mit Zähnen (43) versehen ist.

8. Mechanische Betätigungsvorrichtung nach einem der vorhergehenden Ansprüche, dadurch gekennzeichnet, daß die Feder (56) eine zylindrische Schraubendruckfeder ist, die über das Kabel (26) gezogen ist und einerseits am zweiten Ende des Kabels und andererseits an einem am Pedal (10) gebildeten Anschlagkörper (50) abgestützt ist, so daß das Kabel (26) durch die Feder (56) unter Zugspannung gehalten wird.

9. Mechanische Betätigungsvorrichtung nach Anspruch 8, dadurch gekennzeichnet, daß die Feder (56) auf dem Pedal (10) so positioniert ist, daß sie eine Drehbewegung des Pedals um die feste Achse (12) in Richtung auf seine Ruhestellung hervorruft, bis die zweite Anschlagfläche (64) in Berührung mit der am Pedal (10) gebildeten Anschlagfläche (67) gelangt, um die Ruhestellung des Pedals festzulegen.

10. Betätigungsvorrichtung nach Anspruch 6, dadurch gekennzeichnet, daß die Hülse von einer zylindrischen Schraubenfeder mit einander anliegenden Windungen (160) gebildet wird, wobei die Vorsprünge von diesen Windungen gebildet werden.

## Claims

1. A mechanical actuating device for a receiver (34) of the type comprising members (39) to be engaged and resilient return means (35) exerting a force to be overcome by the mechanical actuating device in order to actuate said receiver, said mechanical actuating device comprising a pedal (10) pivotally mounted on a fixed axis (12), a cable (26) having a first end (25) connected to said receiver (34) and a second end (27) connected to the pedal (10) by means of a driving device, characterized in that said driving device comprises a force-transmitting member (22) pivotally mounted on said fixed axis (12) and having an external cylindrical surface (40) about which said cable (26) is wound, a locking system permitting to connect for rotation said force-transmitting member (22), said cable (26) and said pedal (10) when the latter pivots from its rest position about an angle greater than a predetermined minimum angle ($\alpha_m$), and a spring (56) disposed between said second end of the cable (27) and said pedal (10) for biasing said cable (26) to be under tension.

2. The mechanical actuating device of claim 1, characterized in that said force-transmitting member (22) is provided with a first abutment surface (60) cooperating with a fixed abutment (62) when said force-transmitting member (22) is in its rest position, and with a second abutment surface (64) cooperating with an abutment surface (67) formed on said pedal (10) in order to define said rest position of the pedal.

3. The mechanical actuating device of claim 1 or 2 characterized in that said locking system acts by clamping said cable (26) between a first clamping surface (42) formed on said force-transmitting member (22) and a second clamping surface (44) formed on said pedal (10), said latter clamping surface (44) cooperating with said first clamping surface (42) via said cable (26) in order to cause rotation of said force-transmitting member (22) about which the cable (26) is wound in order to drive the latter when the pedal pivots about an angle greater than said predetermined angle.

4. The mechanical actuating device of claim 3, characterized in that said external surface (47) of said cable (26) is continuously maintained in contact with said second clamping surface (44) formed on the pedal, said external surface of the cable being spaced from said first clamping surface by a predetermined distance (»j«) when said force-transmitting member (22) and said pedal (10) are in their rest positions.

5. The mechanical actuating device of claim 4 characterized in that said cable (26) is provided in the vicinity of said second end (27) with a sleeve (46) enclosing the cable and fixed thereto, said external surface of the cable being comprised by the external wall of said rigid sleeve.

6. The mechanical actuating device of claim 5 characterized in that said external wall of the sleeve is pro vided with a series of projections formed opposite to said first clamping surface (42).

7. The mechanical actuating device of claim 5 or 6 characterized in that said first clamping surface (42) is provided with teeth (43).

8. The mechanical actuating device of any of the preceding claims characterized in that said spring (56) is a cylindrical helical compression spring surrounding said cable (26) and being supported at one end against said second end of the cable and at the other end against an abutment member (50) formed on said pedal (10) such that said cable (26) is maintained under tension by said spring (56).

9. The mechanical actuating device of claim 8 characterized in that said spring (56) is positioned or said pedal (10) such as to cause rotation of the latter about the fixed axis (12) toward its rest position until said second abutment surface (64) comes into contact with the abutment surface (67) formed on the pedal (10) in order to define said rest position of the pedal.

10. The mechanical actuating device of claim 6 characterized in that said sleeve is comprised of a cylindrical helical spring having adjacent turns (160), said projections being comprised of said turns.

FIG_1

FIG_2

FIG_3

FIG_4

FIG.5

FIG.6

FIG.7